# EUROPÄISCHE PATENTSCHRIFT

(11) **EP 0 834 852 B1**
(45) Veröffentlichungstag und Bekanntmachung des Hinweises auf die Patenterteilung: **12.01.2000**
(21) Anmeldenummer: 97115245.9
(22) Anmeldetag: 03.09.1997
(51) Int. Cl.: G09B 19/16, G09B 9/05

(54) **Lehrmittel zum Erlernen des Führens eines Motorfahrzeuges in einer Simultationsanlage, Verfahren zur Herstellung des Lehrmittels und Verwendung des Lehrmittels**
Teaching aid for teaching motor vehicle driving on a simulator, method of making this aid and its use
Moyen didactique pour l'apprentissage de la conduite d'un véhicule sur simulateur, méthode de réalisation de ce moyen et son utilisation

(30) Priorität: 16.09.1996 CH 226496
(43) Veröffentlichungstag der Anmeldung: 08.04.1998
(73) Patentinhaber: Oerlikon Contraves AG, 8050 Zürich (CH)
(72) Erfinder: Dueringer, Heinrich, 8052 Zürich (CH); Thoeni, Urban, Dr., 8308 Illnau (CH)
(74) Vertreter: Hotz, Klaus, Dipl.-El.-Ing./ETH Patentanwalt

(56) Entgegenhaltungen:
- EP-A- 0 391 546
- EP-A- 0 483 991
- WO-A-94/16423
- WO-A-94/19783
- WO-A-94/19784
- WO-A-94/19785
- GB-A- 2 260 304
- NL-A- 9 100 838
- US-A- 5 311 422
- "DRIVING SIMULATION AT FORD" AUTOMOTIVE ENGINEERING, Bd. 102, Nr. 9, 1.September 1994, Seiten 37-40, XP000469064
- VAN WOLFFELAAR P C ET AL: "A NEW DRIVING SIMULATOR INCLUDING AN INTERACTIVE INTELLIGENT TRAFFIC ENVIRONMENT" 2.September 1992 , PROCEEDINGS OF THE VEHICLE NAVIGATION AND INFORMATION SYSTEMS CONFERENCE, OSLO, SEPT. 2 - 4, 1992, NR. CONF. 3, PAGE(S) 499 - 506 , OLAUSSEN L;HELLI E XP000365995 * das ganze Dokument *

## Beschreibung

Gegenstand der Erfindung sind ein System nach dem Oberbegriff des Patentanspruchs **1**, ein Verfahren zur Herstellung des Systems nach dem Oberbegriff des Patentanspruchs **8** und eine Verwendung des Systems nach dem Oberbegriff des Patentanspruchs **12.**

In neuerer Zeit wird versucht, den Unterricht zum Erlernen des Führens von motorisierten erdgebundenen Fahrzeugen jeder Art und insbesondere von Strassenfahrzeugen, nicht oder nicht ausschliesslich in einem Schulfahrzeug auf der Strasse sondern mit einem System, welches eine Simulationsanlage umfasst, abzuhalten. Damit werden die folgenden Ziele angestrebt: Die Verringerung der Gefahr für den Fahrschüler und die anderen Verkehrsteilnehmer, die Vermeidung der Behinderung des Strassenverkehrs durch den Fahrschüler, das Erzielen rascherer Lernfortschritte durch den Wegfall der gefahrenbedingten psychischen Hemmungen des Fahrschülers, die Schonung des Schulfahrzeuges, da dieses nur in einem späten Stadium des Lernprozesses benützt wird, die Einsparung von Treibstoff, was sowohl ökologisch wie ökonomisch erwünscht ist, und Verminderung des Zeitaufwandes des Instruktors.

Beim Unterricht in einer Simulationsanlage befindet sich der Fahrschüler in einer Fahrerkabine, die einer echten Fahrerkabine vorzugsweise so ähnlich wie möglich ist, und die insbesondere die in einem Fahrzeug üblichen Bedienungsmittel wie Lenkrad, Kupplung, Gas, Bremse und ähnliche sowie die üblichen Anzeigegeräte, zum Beispiel für Geschwindigkeit, Temperaturen, Treibstoffvorrat und ähnliches enthält.

Dem Fahrschüler wird mittels eines Szenariengenerators ein zeitlich wechselndes Szenario zur Wahrnehmung gebracht, das echte Verkehrssituationen möglichst genau simuliert. Szenariengeneratoren enthalten im allgemeinen ein optisches System mit einer Projektorenanlage und einer Wiedergabefläche, um dem Fahrschüler optisch wahrnehmbare Verkehrssituationen zu simulieren. Sie können weitere Systeme zum Simulieren akustisch, mechanisch und nasal wahrnehmbarer Verkehrssituationen umfassen, deren simulative Wirkung sich nicht auf der Wiedergabefläche sondern am oder im Fahrzeug manifestiert.

Die vom Szenariengenerator dem Fahrschüler zur Wahrnehmung gebrachten Verkehrssituationen beinhalten den Lehr- und Übungsstoff, den der Fahrschüler im Laufe des Unterrichts benutzt, und der Repetitions-, Einführungs-, Übungs- und Teststoff beinhaltet und im allgemeinen thematisch gegliedert und in verschiedenen Schwierigkeitsgraden vorhanden ist. Lehr- und Übungsstoff dieser Art bzw. seine Verwendung in Simulatoren ist bekannt. Seine Nachteile bestehen zum einen darin, dass die Szenarien zu wenig realitätsgetreu sind, was zur Folge hat, dass der mit solchen Lehrmitteln erteilte Unterricht nicht sehr attraktiv ist. Zum anderen stehen nur sich über beträchtliche Teile von Lektionen erstreckende, unveränderbare Szenarien zur Verfügung, was bedeutet, dass die Vermittlung des Lehrstoffes nicht flexibel gehandhabt werden kann. Meist verfügt man auch nur über eine beschränkte Anzahl von Szenarien, weil deren Herstellung verhältnismässig aufwendig ist; der Fahrschüler kennt diese Szenarien nach kurzer Zeit praktisch auswendig, so dass der Lerneffekt gering ist und insbesondere das Verhalten in unerwarteten Situationen, was ein sehr wichtiger Bestandteil des Lernvorganges wäre, nicht geübt werden kann.

Aus der **WO-94/19785** ist beispielsweise ein Verfahren bekannt, um ein Computerspiel oder Lernprogramm zu erstellen, wobei der Lehr- und Übungsstoff, individuell zusammengestellt und auf einem Informationsträger gespeichert ist. Es wird eine PC benutzt, um den Lehr- und Informationsstoffes dem Schüler zu vermitteln. Nachteilig ist dabei nicht nur, dass sich der Schüler vor dem PC und nicht in einer Fahrzeugumgebung befindet und nur gewisse Teilaspekte von Verkehrsituationen simulierbar sind, sondern auch, dass innerhalb einer Lektion keine Veränderung des Lehr- und Übungsstoffes in Abstimmung auf die Leistungen des Schülers möglich ist.

Aus der **NL-A-9 100 838** ist eine Trainingsstation bekannt, welche vornehmlich zur Ausbildung von Piloten ausgebildet ist. Die Schüler werden mit von sogenannten Instruktionsmodulen konfrontiert, welche eigentlich Übungsteile einer Lektion bilden; während sich die Schüler an diesen üben, werden sie bewertet; ist das Ergebnis gut, so folgt der nächste Block; ist das Ergebnis mittelmässig, so folgt nochmals ein sogenanntes Instruktionsmodul, damit der Schüler weiter üben kann. Ist das Ergebnis schlecht, so folgt ein sogenanntes Korrekturmodul, das mit Bezug auf die spezifischen Fehler des Schülers ausgewählt wird. Nachteilig ist dabei, dass der Schüler zu Beginn nicht wirklich unterrichtet wird sondern sofort geübt wird, so dass er stets unter grosser Spannung steht. Ein eigentlicher Unterricht findet erst dann statt, wenn der Schüler sich schlecht qualifiziert, da der dann folgende Korrekturblock spezifisch auf diese Fehler ausgerichtet ist.

Bei der Trainingsstation gemäss der **NL-A-9 100 838** kann der Instruktor zwar eingreifen, jedoch hat dies einen Abbbruch oder mindestens einen Unterbruch der Lektion zur Folge, was im Hinblickauf einen wirklichkeitsnahen Unterricht, bei welchem der Fahrschüler auch die Beherrschung schwierigster Situationen meistern sollte, nicht erwünscht ist.

Es ist deshalb Aufgabe der Erfindung, ein verbessertes System der eingangs genannten Art zu schaffen, mit welchem ohne grossen Aufwand ein attraktiver, flexibler und effizienter Unterricht möglich ist, wobei der Schüler gewissermassen als Ersatz für einen Frontalunterricht vor dem Beginn des Übungsteils einen Einführungsteil absolviert, während welchem er nicht bewertet wird, so dass ein entspanntes Lernen stattfinden kann und Wissen vermittelt wird, das sich der Fahrschüler nicht unbedingt durch reines Üben aneignen kann.

Ausserdem soll durch einen Eingriff eines Instruktors in eine Lektion diese nicht unterbrochen werden.

Im weiteren besteht die Aufgabe der Erfindung darin, ein Verfahren zur Herstellung dieses Systems und eine Verwendung dieses Systems vorzuschlagen.

Diese Aufgaben werden erfindungsgemäss durch die kennzeichnenden Teile der Patentansprüche **1** bzw. **8** bzw. **12** gelöst. Vorteilhafte Ausgestaltungen des Systems, des Verfahrens zu seiner Herstellung und seiner Verwendung sind durch die jeweiligen abhängigen Patentansprüche definiert.

Das neue System ist erfindungsgemäss auf den Unterricht zum Führen erdgebundener Fahrzeuge ausgerichtet, und zwar soll insbesondere das Verhalten im Verkehr geübt werden, obwohl auch Möglichkeiten geboten werden, das Fahren im Gelände zu üben, wo die Beherrschung des Fahrzeuges höhere Anforderungen stellt als das Verhalten im Verkehr. Der Unterricht ist so aufgebaut, dass dem Fahrschüler ein entspanntes Lernen ermöglicht wird. Erfindungsgemäss findet vor dem Übungsteil stets ein Einführungsteil statt, während welchem der Fahrschüler nicht bewertet wird. Der Einführungsteil kann grundsätzlich anders gestaltet werden als der Übungsteil; er dient zur eigentlichen Wissensvermittlung in der Art von Frontalunterricht Die dafür geeigneten Blöcke können übliche Blöcke mit Verkehrssituationen sein, in welchen aber die Betätigung des Fahrzeuges durch den Fahrschüler unter permanenter Instruktion, z.B. durch eingeblendeten Text oder durch einen Instruktor erfolgt; es kann auch vorgesehen sein, dass die Betätigung des Fahrzeuges nicht durch den Fahrschüler sondern durch den Instruktor erfolgt; im weiteren können spezifische, nur zu Demonstrationszwecken geeignete Blöcke, verwendet werden. Es liegt auf der Hand, dass Blöcke mit anderen Informationen, wie sie weiter oben beschrieben wurden, vor allem im Einführungsteil verwendet werden, mit Ausnahme der Fahrbefehle, die prinzipiell in Blöcken des Repetitionsteils, des Übungsteils und des Testteils eingebaut sind. Ein Eingriff des Instruktors unterbricht die Lektion nicht.

Grundsätzlich werden beim neuen System dem Fahrschüler nicht Verkehrssituationen in Form länglicher Szenarien simuliert, sondern in Form eher kurze Blöcke, welche zur Bildung von Lektionen in verschiedener Anzahl, Auswahl und Reihenfolge hintereinandergeschaltet werden. Eine gewisse Anzahl von Lektionen ergibt schliesslich ein Unterrichtsprogramm bzw. denjenigen Teil des Fahrunterrichts, der in der Simulationsanlage und nicht im Schulfahrzeug abgehalten wird. Die oben erwähnten Blöcke können so gestaltet sein, dass sie anstelle von oder zusätzlich zu Verkehrssituationen dem Fahrschüler andere Informationen, wie eingeblendete graphische Darstellungen, Schemata von Verkehrssituationen, Mitteilungen in Textform und Fahrbefehle, zum Beispiel zum Abzweigen, in Form von Pfeilen, vermitteln.

Die Lektionen werden mit Vorteil so aufgebaut, dass jede der Lektionen, mit Ausnahme natürlich der ersten, einen Repetitionsteil mit mindestens einem zu Repetitionszwecken geeigneten Block mit dem Stoff früherer Lektionen enthält. Vorzugsweise stehen für einen Repetitionsteil mehrere thematisch geeignete Blöcke zur Verfügung. Zu Repetitionszwekken eigenen sich im allgemeinen Blöcke, die - wie weiter unten beschrieben - auch zu Übungszwecken verwendet werden; es können aber auch spezifisch zu Repetitionszwekken verwendbare Blöcke geschaffen werden.

Anschliessend an den Einführungsteil folgt beim üblichen Ablauf einer Lektion sinnvollerweise der Kern der Lektion, nämlich ein Übungsteil. Jeder Übungsteil umfasst vorzugsweise mehrere zu Übungszwecken geeignete Blöcke. Es ist günstig, wenn der Übungsteil in mehrere Übungsstufen aufgeteilt ist, von welchen jede Übungsstufe mehrere Blöcke enthält; dabei kann das System so konzipiert sein, dass in jeder Übungsstufe die auf den er) sten Block folgenden Blöcke mindestens teilweise übersprungen werden und ein direkter Übergang zur nächsten Übungsstufe bzw. ggfs. zu einem folgenden Teil der Lektion stattfindet.

Für den Fahrschüler ist es motivierend, wenn die Lektion mit einem Testteil beendigt wird, der mindestens einen, zu Testzwecken geeigneten Block umfasst; als solcher eignet sich im allgemeinen ein üblicher, auch zu Repetitions- und Übungszwecken geeigneter Block, obwohl natürlich auch spezielle Testblöcke hergestellt werden können.

Erfindungsgemäss wird beim neuen Verfahren zur Herstellung des Systems so vorgegangen, dass man bei der Erstellung eines Blockes von einem Grundszenario ausgeht, das entweder bereits zur Verfügung steht oder das zuerst hergestellt wird, und das sich im Verlauf des Blockes nicht wesentlich ändert.

Das Grundszenario legt die sich im Laufe eines Blockes nicht abrupt wechselnden Elemente der zu simulierenden Verkehrsituation fest, insbesondere den Verlauf und die ungefähre Art der Strasse sowie die landschaftlich/bauliche Umgebung.

Das Grundszenario kann - falls es nicht schon zur Verfügung steht - aus in einer Datenbank gespeicherten Daten mittels einer Datenverarbeitungsanlage hergestellt werden. Als Basis dienen Daten, die einen Plan, beispielsweise eine Strassenkarte oder ein Ortsplan, definieren, der so aufbereitet ist, dass nicht nur die Strassenverläufe sondern auch die jeweilige Umgebung vorbekannt sind. Der Plan wird auf einem Bildschirm visualisiert und der für den Block gewünschte Weg, auf Strassen oder ggfs. im Gelände, wird festgelegt. Dies kann z.B. durch Eingabe von Koordinaten oder durch Anklicken einer Punktfolge längs des Strassenverlaufs mittels einer Maus erfolgen. Die Erstellung der Datenbank und damit die Herstellung der Grundszenarien ist verhältnismässig aufwendig.

Die Datenbank enthält ferner Daten über Szenarienzusätze, die abgerufen werden können, und mit denen jedes Grundszenario in mannigfaltiger Weise verändert werden kann. Gewisse Szenarienzusätze, die wie das Grundszenario innerhalb eines Blockes nicht abrupt ändern, wie zum Beispiel das Fahrzeuggewicht, ggfs. die Bereifung die Fahrzeugabmessungen, das Vorhandensein eines Anhängers sowie dessen Art und Gewicht, sollten stets verwendet werden. Funktionell gehören sie zu einem erweiterten Grundszenario. Aus einem Grundszenario können somit in einfacher Weise zahlreiche erweiterte Grundszenarien hergestellt werden.

Aus den durch die erweiterten Grundszenarien gebildeten Blöcken lassen sich bereits zahlreiche verschiedene Lektionen herstellen, indem man immer wieder andere Blöcke auswählt und sie auch in anderer Reihenfolge zusammensetzt. Allerdings ist darauf zu achten, dass zur Simulierung einer realitätsgetreuen Verkehrssituation bei der Auswahl und der Reihenfolge der zusammenzusetzenden Blöcke solche mit ähnlichen Grundszenarien verwendet werden.

Anders als bei herkömmlichen Systemen stehen nicht nur die erwähnten, im allgemeinen erweiterten, Grundszenarien in einer unveränderbaren Form zur Verfügung, sondern jedes derselben lässt sich durch weitere Szenarienzusätze abwandeln. Unter diesen weiteren Szenarienzusätzen sind im Rahmen dieser Erfindung Elemente der Verkehrssituation zu verstehen, die sich rasch ändern, so zum Beispiel die Strassenqualität, der meteorologisch bedingte Strassenzustand, Verkehrszeichen jeder Art wie Verkehrslinien, Ampeln, Schilder wie Hinweis-, Verbots- und andere Schilder, temporäre Abschrankungen beispielsweise wegen Baustellen oder Unfällen, andere ruhende oder sich bewegende, sich vorschriftsmässig oder vorschriftswidrig verhaltende Verkehrsteilnehmer, die sich zeitlich oder ereignisabhängig steuern lassen, Sicht- und Wetterverhältnisse. Obwohl die Möglichkeit besteht, Grundszenarien oder erweiterte Grundszenarien ohne Szenarienzusätze zu verwenden, wird im allgemeinen mindestens ein weiterer Szenarienzusatz verwendet. Jedes erweiterte Grundszenario kann natürlich mit unterschiedlichen weiteren Szenarienzusätzen bestückt werden, so dass schliesslich aus einem Grundszenario ohne grossen Aufwand eine Vielzahl unterschiedlicher Blöcke herstellbar ist.

Wie schon erwähnt, wird bei der Verwendung des Systems vorzugsweise so vorgegangen, dass der Fahrschüler in einer Lektion mehrere Lektionsteile, vorzugsweise einen Einführungsteil, einen Übungsteil und einen Testteil in der genannten Reihenfolge absolviert; dazu kommt mit Vorteil von der zweiten Lektion an ein Repetitionsteil zu Beginn der Lektion.

Obwohl auch ein Lerneffekt vorhanden ist, wenn das neue Sysytem verwendet wird, ohne dass eine Bewertung des Fahrschülers stattfindet, so steigert sich im allgemeinen der Lernwille und damit der Fortschritt des Fahrschülers, wenn er eine Bewertung zu erwarten hat. Daher erfolgt bei der Verwendung des neuen Systems vorzugsweise in jedem Block, mit Ausnahme der Blöcke des Einführungsteils, eine Bewertung des Fahrschülers, die in Funktion der Qualität und der Quantität seiner Fehler vorgenommen wird. Die Bewertung erweist sich auch für die Planung des gesamten Unterrichtsprogramms als hilfreich, da beispielsweise je nach dem Ergebnis, mit welchem ein Testblock absolviert wurde, der Repetitionsblock der nächsten Lektion ausgewählt werden kann.

Es hat sich als günstig erwiesen, die Fehler für die Bewertung in verschiedene qualitative Fehlerkategorien einzuteilen; jeder Fehlerkategorie kann ein gewisses Gewicht für die Gesamtbeurteilung zugeschrieben werden, insbesondere können einzelnen Fehlerkategorien temporär Gewichte zugeschrieben oder die Fehlerkategorien ausgeblendet werden. Jeder Fehler wird ausserdem durch Zuteilung zu einer von mehreren quantitativen Fehlerstufen bewertet, d.h. gewissermassen benotet; die Fehlerstufen können je nach dem Fortschritt des Fahrschülers anders definiert werden.

Eine sinnvolle Durchführung einer Lektion besteht darin, dass der Unterricht nur fortschreitet, wenn ein bestimmter Block mit einer genügenden Bewertung durchlaufen wird, während bei einer ungenügenden Bewertung eine Repetition, jedoch vorzugsweise unter Benützung eines anderen geeigneten, thematisch also etwa gleichen Blockes erfolgt.

Besonders günstig ist es, wenn die Verwendung des Systems so erfolgt, dass im Übungsteil die Blöcke einer Übungsstufe nur soweit durchlaufen werden, bis bei einem Block eine genügende Bewertung resultiert, worauf die restlichen Blöcke dieser Übungsstufe übersprungen werden und zur nächsten Übungsstufe bzw. bei der letzten Übungsstufe zum Testteil übergegangen wird.

Die Simulierung eines Fahrzeugdefektes kann als Szenarienzusatz in einen Block aufgenommen werden. Bei Verwendung einer geeigneten Simulationsanlage ist es aber auch möglich, dass ein Fahrzeugdefekt durch einen Direkteingriff, beispielsweise eines Instruktors, stattfindet.

Der Instruktor kann im übrigen den Ablauf des Unterrichtsprogrammes bestimmen, indem er, wie schon beschrieben, jeweils den Repetitionsblock in Funktion des Ergebnisses des Testblocks der vorherigen Lektion wählt.

Die oben beschriebenen und weitere Einzelheiten der Erfindung werden im folgenden anhand von Beispielen und mit Bezug auf die Zeichnung ausführlich beschrieben. Darin zeigt:
- **Fig. 1**: eine Simulationsanlage in stark vereinfachter Darstellung;
- **Fig. 2A**: ein Unterrichtsprogramm mit mehreren Lektionen, in schematischer Darstellung;
- **Fig. 2B**: eine Lektion mit mehreren Lektionsteilen, in schematischer Darstellung;
- **Fig. 3A**: einen Strassenplan einer ersten Gegend, zur Illustration der Herstellung eines Grundszenarios;
- **Fig. 3B**: einen Strassenplan einer zweiten Gegend, zur Illustration der Herstellung eines weiteren Grundszenarios;
- **Fig. 4**: eine schematische Darstellung der Verknüpfungs-Möglichkeiten von Grundszenarien verschiedener Gegenden; und
- **Fig. 5A - 5E**: vier Varianten des Ablaufs einer Lektion.

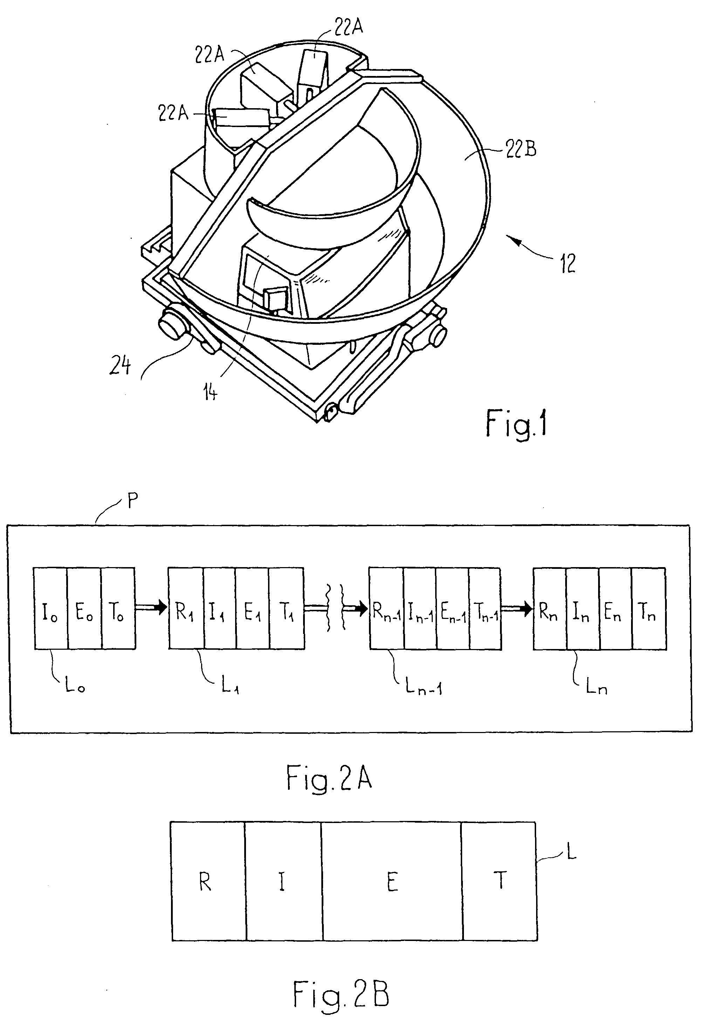

Die in **Fig. 1** dargestellte Simulationsanlage ist in der gleichzeitig eingereichten CH-Patentanmeldung **Nr. 2262196** derselben Anmelderin ausführlich beschrieben. Sie besteht im wesentlichen aus einer Trainingsstation **12** mit einer Fahrerkabine **14,** die eine wirklichkeitsgetreuen Nachbildung einer Original-Fahrzeugkabine ist. Die Fahrerkabine **14** ist mit üblichen Betätigungsmitteln wie Lenkrad, Kupplung, Bremse, Gas, Blinkerhebel, Lichtschaltern sowie mit üblichen Anzeigevorrichtungen, insbesondere für Geschwindigkeit, Temperaturen, Treibstoffvorrat und dergleichen ausgestattet, wobei die Betätigungsmittel und die Anzeigegeräte serienmässige Originalteile aus der Fahrzeugproduktion sind. Im weiteren enthält die Trainingsstation **12** einen Szenariengenerator von welchem nur ein optisches Simulatorsystem mit drei Projektoren **22A** und einer Projektionsfläche **22B** sowie ein Teil eines mechanischen Simulatorsystems in Form einer beweglichen Lagerung **24** der Fahrerkabine dargestellt ist; alternativ kann das mechanische Simulatorsystem mit dem Fahrersitz gekoppelt sein. Mit dem Szenariengenerator werden einem in der Fahrerkabine **14** befindlichen Fahrschüler Szenarien in Form von zeitlich ablaufenden Verkehrssituationen zur Wahrnehmung gebracht wird. Der Lernvorgang besteht, wie in herkömmlichen Simulationsanlagen, im wesentlichen darin, dass der Fahrschüler die Szenarien wahrnehmen und die Beherrschung des fiktiven Fahrzeuges in der jeweiligen fiktiven Verkehrssituation durch geeignete Betätigung der in der Fahrerkabine **14** vorhandenen echten Betätigungsmittel sowie unter Beobachtung der ebenfalls in der Fahrerkabine **14** vorhandenen echten Anzeigegeräte erlernen bzw. üben soll, wobei als Lehrmittel die dem Schüler zur Wahrnehmung gebrachten Verkehrssituationen und andere Informationen dienen.

Erfindungsgemäss bestehen die Verkehrssituationen und die anderen Informationen aus einzelnen, modulartigen Blöcken, die sich zu Lektionen zusammensetzen lassen. Unter anderen Informationen sind insbesondere Anweisungen zum Abzweigen zu verstehen, die eingeblendet werden, sowie in den Einführungsteilen vorkommende Texttafeln und bildliche Darstellung für eine Art Frontalunterricht.

Ein übliches, in **Fig. 2A** schematisch dargestelltes Unterrichtsprogramm **P** umfasst einen Lektionenplan mit n Lektionen **L0 - Ln.** Der Lektionenplan kann für jeden Fahrschüler individuell gestaltet werden und ausserdem im Verlauf des Unterrichtsprogramms je nach dem Ausbildungsfortschritt modifiziert werden. Gemäss den **Fig. 2A** und **2B** umfassen alle Lektionen **L** einen Einführungsteil **I**, einen Übungsteil **E** und einen Testteil **T**, die in der genannten Reihenfolge aneinandergereiht sind. Im weiteren umfassen die Lektionen **L1 - Ln,** das heisst alle Lektionen mit Ausnahme der ersten Lektion **L0**, einen Repetitionsteil **R**, der dem Einführungsteil **I** vorgeschaltet ist.

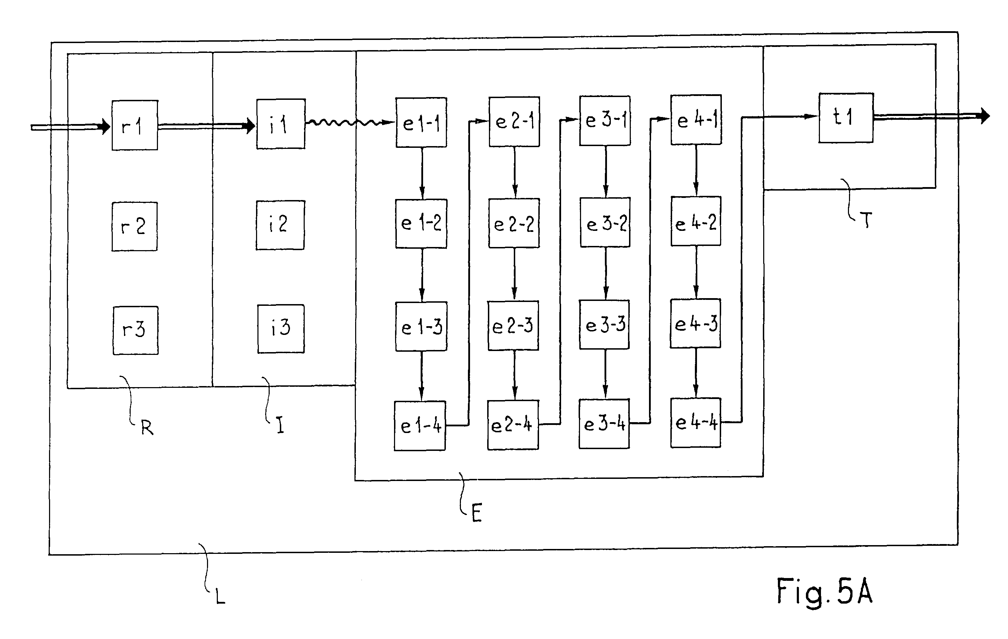

Der Repetitionsteil **R** befasst sich mit dem Stoff früherer Lektionen. Der Fahrschüler hat gemäss Fig. **5A - 5D** einen für die Repetition geeigneten Block r zu absolvieren, wobei es sich um einen üblichen, zum Beispiel auch in einem Testteil verwendbaren Block oder um einen spezifischen Repetitionsblock handeln kann. Im dargestellten Beispiel sind mehrere thematisch passende Blöcke **r1 - r3** vorhanden, von welchen einer, zum Beispiel **r1**, ausgewählt wird. Weitere Blöcke, also **r2** und/oder **r3** können - wie weiter unten beschrieben wird - verwendet werden, wenn der erste Block **r1** des Repetitionsteils R mit einer ungenügenden Bewertung absolviert worden ist. Diese Blöcke unterscheiden sich zwar in Einzelheiten, jedoch wird ein gewisser Standard des Könnens stets verlangt.

Der Einführungsteil **I** enthält drei Blöcke **i1, i2, i3,** von welcher einer, zum Beispiel **i1,** ausgewählt wird. Ein anderer Block, **i2** oder **i3**, wird ggfs. später ausgewählt, falls sich wegen mangelndem Lernerfolg die nochmalige Einführung in den bereits vermittelten Stoff als notwendig erweisen sollte. Der Einführungsteil I besteht aus einem speziellen Demonstrationsblock und/oder aus anderen Informationen.

Der Übungsteil E bildet den Kern der Lektion L und gibt dem Fahrschüler Gelegenheit, neuen Lehrstoff zu üben und dadurch profund zu assimilieren. Zu diesem Zwecke besteht er aus mehreren Blöcken. Diese Blöcke sind in mehrere Übungsstufen, im vorliegenden Fall in die Übungsstufen **1 - 4** eingeteilt, deren Schwierigkeitsgrad zunimmt. In jeder Übungsstufe sind vier unterschiedliche Blöcke **e1-1** bis **e1-4** bzw. **e2-1** bis **e2-4** bzw. **e3-1** bis **e3-4 bzw. e4-1** bis **e4-4** vorhanden, die - wie schon erwähnt und weiter unten ausführlich beschrieben - mindestens teilweise überspringbar sind.

Den Abschluss der Lektion **L** bildet der Testteil **T**, mit einem zu Testzwecken geeigneten Block **t1,** der ein spezifischer Testblock oder ein auch als Repetitions- oder Übungsblock verwendbarer Block sein kann.

Im Rahmen der vorliegenden Erfindung soll unter einem Szenario die gesamte simulierbare zeitlich ablaufende Verkehrssituation verstanden werden, die von einem Szenariengenerator dem Fahrschüler zur Wahrnehmung gebracht wird.

Die optisch wahrnehmbare Verkehrssituation umfasst den Blick auf die Haube des Fahrzeuges, soweit diese beim simulierten Fahrzeug für den Fahrschüler sichtbar ist, die landschaftlich/bauliche Umgebung, die Strasse mit den Verkehrslinien, die Gesamtheit der durch Verkehrslinien, Schilder, Ampeln, Abschrankungen gebildeten Verkehrszeichen. Ebenfalls zur Verkehrssituation gehören weitere Verkehrsteilnehmer wie Tiere, Menschen und Fahrzeuge, welche ruhen oder sich bewegen, wobei sie sich vorschriftsmässig oder vorschriftswidrig verhalten können und zeitlich oder situationsbedingt steuerbar sind. Schliesslich gehört die Darstellung der Sicht- und teilweise der Meteorologieverhältnisse, wobei die letzteren allerdings auch den Strassenzustand beeinflussen können, zu den optisch wahrnehmbaren Elementen der Verkehrssituation. Die obige Aufzählung ist nicht abschliessend.

Die akustisch wahrnehmbare Verkehrssituation umfasst die Geräusche, die vom Fahrschüler wahrnehmbar sind. Dabei handelt es sich um simulierte Geräusche des Fahrzeuges, eines Beifahrers, von Passagieren, und Geräusche der Umgebung, herrührend von Wind und Wasser, sowie um Geräusche des übrigen Verkehrs. Auch diese Aufzählung ist nicht abschliessend.

Die mechanisch wahrnehmbare Verkehrssituation betrifft den Einfluss des Strassenbelages bzw. der Strassenqualität sowie den Reibungswert, der beispielsweise bei Vereisung tief ist, ausserdem die Neigung der Strasse und die Wirkung von Beschleunigungen und Verzögerungen des Fahrzeuges.

Zur Verkehrssituation werden ferner die Variation des Fahrzeuggewichts bzw. das Ladungsgewicht, ggfs. die Höhe der Ladung, das eventuelle Vorhandensein eines Anhängers sowie dessen Typ und Gewicht, die Art der Bereifung, der Pneudruck mit ggfs. vorhandenen Ketten oder Spikes gezählt.

Es liegt auf der Hand, dass sich mit einer grösseren Anzahl von Elementen der Verkehrssituationen wirklichkeitsnähere Szenarien bzw. Blöcke herstellen lassen.

Die Herstellung der Blöcke des Systems erfolgt erfindungsgemäss dadurch, dass für jeden Block ein Grundszenario verwendet wird, das aus einer Vielzahl von in einer Datenbank gespeicherter Grundszenarien ausgewählt wird.

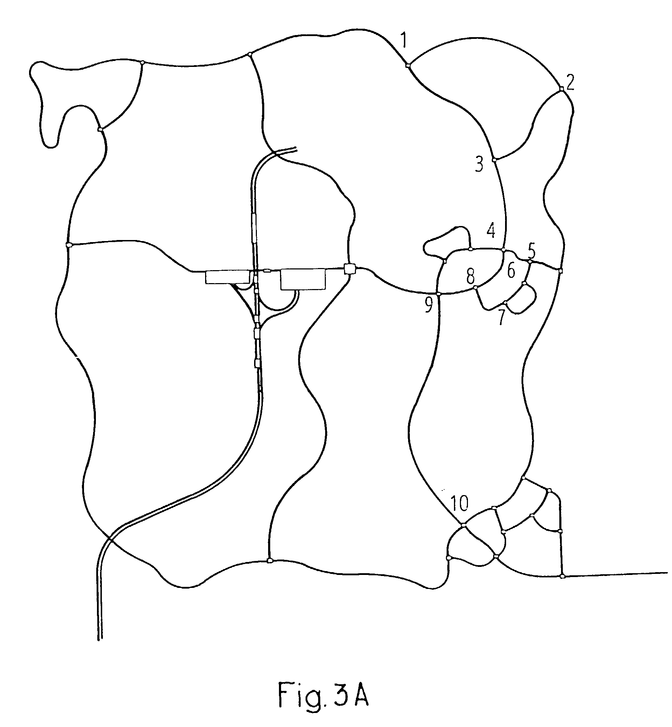

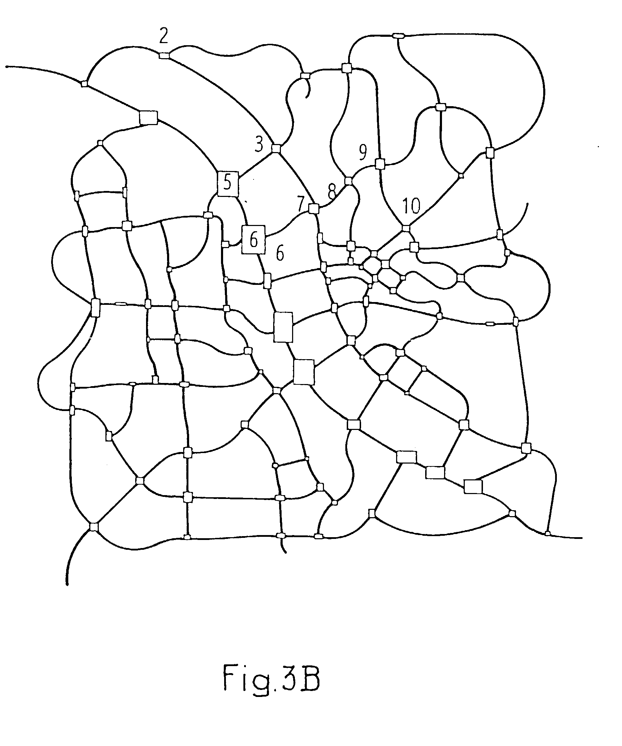

Sind keine Grundszenarien vorhanden, so lassen sie sich vor der Herstellung der Blöcke erzeugen, indem man gemäss **Fig. 3A und 3B** auf einem visualisierten Strassenplan, der implizit die Grundszenarien enthält und der gemäss **Fig. 3A** etwa einer Strassenkarte und gemäss **Fig. 3B** bzw. einem Ortsplan entspricht, die einzuschlagende Route bestimmt, was durch Maus-Anklicken von ausgewählten Punkten **1** bis **10** geschieht.

Nach der Erfindung lässt sich nun jedes Grundszenario durch aus der Datenbank einzeln oder in Gruppen abrufbare Szenarienzusätze bereichern bzw. ergänzen.

Zu einem erweiterten Grundszenario gehören Szenarienzusätze mit Elementen der Verkehrssituation, die sich im Verlauf einer Fahrt von der Dauer eines Blockes oder einer Lektion nicht oder kaum zu ändern pflegen, also das Gewicht des Fahrzeuges und des eventuellen Anhängers.

Als weitere Szenarienzusätze werden alle veränderbaren Elemente der Verkehrssituation betrachtet, so unter anderem die genaue Art der Strasse, da beispielsweise innerhalb einer bestimmten landschaftlichen Umgebung sowohl eine Autostrasse wie auch ein Feldweg denkbar ist, ebenso wie innerhalb einer bestimmten baulichen Umgebung sowohl eine Autobahn wie auch eine Ausserortsstrasse denkbar ist. Ferner gehören die Verkehrszeichen jeder Art zu den Szenarienzusätzen. Zu den weiteren Szenarienzusätzen gehören auch Elemente des das Fahrzeug umgebenden Verkehrs, also Schienenfahrzeuge, Strassenfahrzeuge, Personen und Tiere; diese Elemente lassen sich zeitlich und situationsbedingt steuern. Schliesslich gehören auch die Sicht- und Meteorologieverhältnisse zu den Szenarienzusätzen.

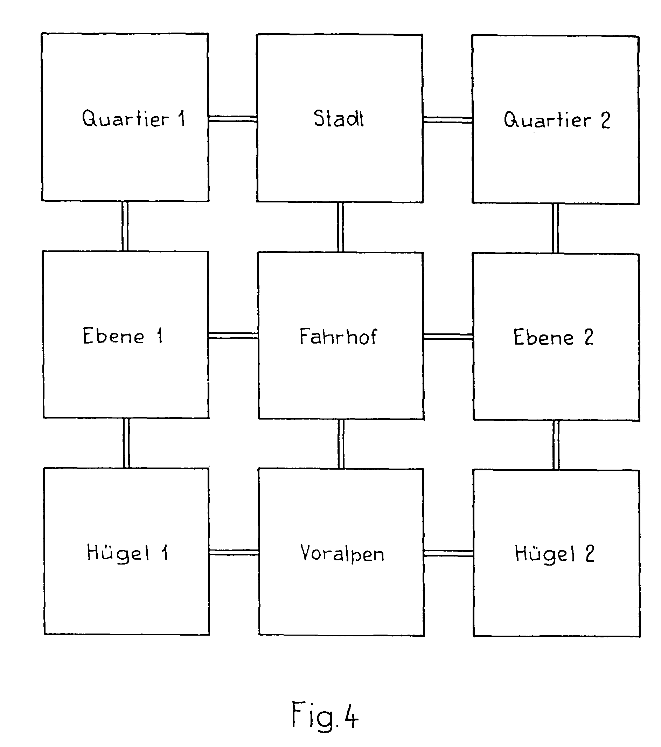

Obwohl prinzipiell zu einem bestimmten Grundszenario alle Szenarienzusätze abrufbar sind, muss bei der Herstellung der Blöcke natürlich auf eine qualitativ und quantitativ sinnvolle Verwendung der einzelnen Szenarienzusätze geachtet werden. Zur Illustration ist in **Fig. 4** nicht nur dargestellt, für welche Arten landschaftlich/baulicher Umgebungen Grundszenarien vorgesehen sind, sondern auch, in welcher Verknüpfung diese Umgebungen verwendet werden können.

Es ist leicht einzusehen, dass beim erfindungsgemässen Verfahren zur Herstellung des neuen Lehrmittels zwar die Erstellung der Datenbank mit den Daten der Grundszenarien und der Szenarienzusätze verhältnismässig aufwendig ist. Daraus lassen sich dann aber mit minimalstem Aufwand eine sehr grosse Zahl von Grundszenarien und durch deren Ergänzung mittels der Szenarienzusätze eine nahezu unbegrenzte Zahl von Blöcken erzeugen.

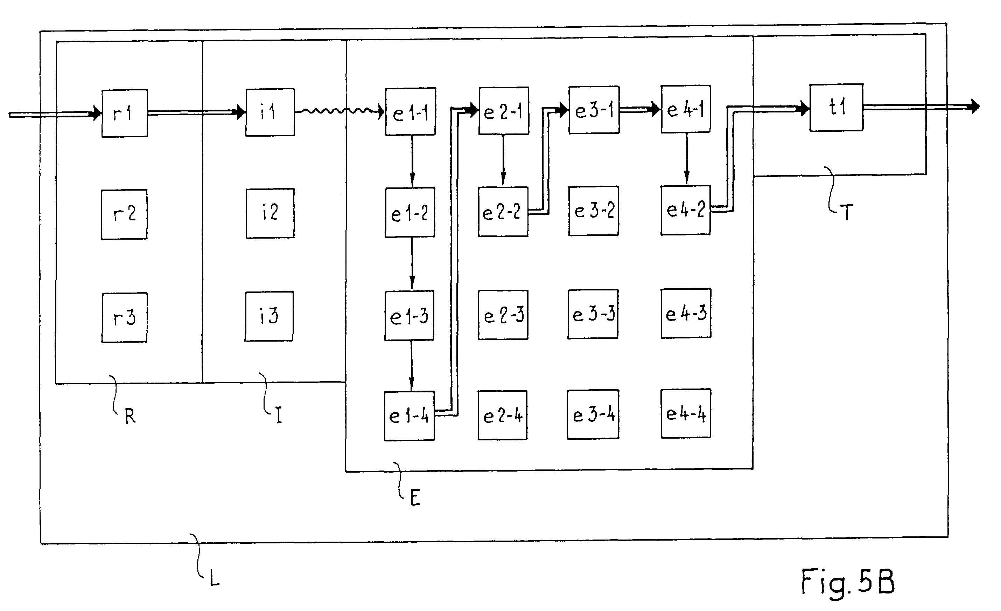

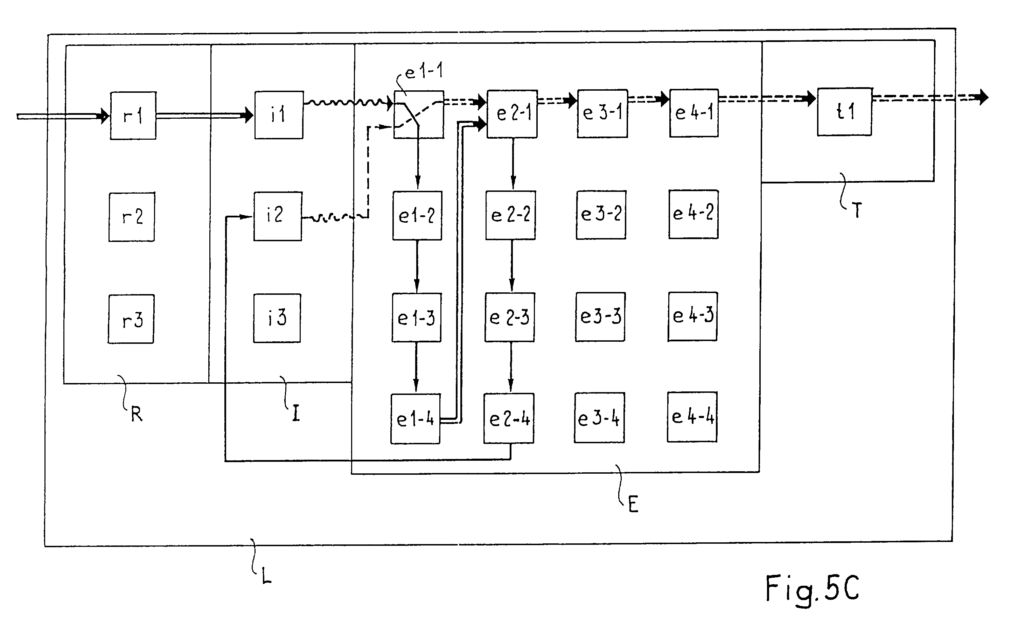

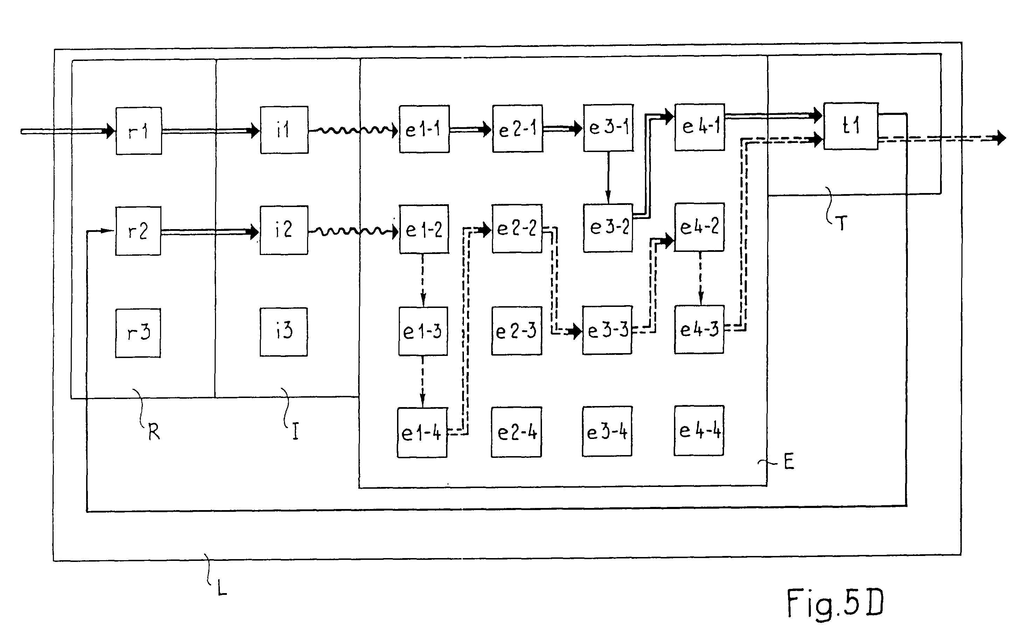

Die **Fig. 5A, 5B, 5C, 5D** zeigen in schematischer Darstellung verschiedene Möglichkeiten des Ablaufs derselben Lektion und damit einige der möglichen Varianten der Verwendung der Blöcke des erfindungsgemässen Systems. Für diese Figuren gilt, dass mit **L** eine vollständige Lektion bezeichnet ist, innerhalb welcher der Repetitionsteil **R**, der Einführungsteil **I**, der Übungsteil **E** und der Testteil **T** vorgesehen sind. Die einzelnen Blöcke sind wie folgt bezeichnet: die Blöcke des Repetitionsteils **R** mit **r1, r2; r3**; die Blöcke des Einführungsteils **I** mit **i1, i2, i3;** die Blöcke der vier Übungsstufen des Übungsteils E mit **e1, e2, e3, e4,** wobei der erste Block jeder Übungsstufe den Zusatz **-1**, die weiteren Blöcke die Zusätze -**2**, bzw. -**3**, bzw. -**4** tragen; der Block des Testteils **T** mit **t1**.

Der unterschiedliche Verlauf der Lektion ist eine Folge des Verhaltens des Fahrschülers und der daraus resultierenden Bewertung des Fahrschülers, die - wie schon erwähnt - zur Erreichung eines befriedigenden Lernverhaltens und Lernzieles durchgeführt wird, und zwar aufgrund der vom Fahrschüler begangenen Fehler.

Die Fehler sind im vorliegenden Ausführungsbeispiel in fünf Fehlerkategorien eingeteilt, die wie folgt definiert sind: 1. Handhabung des Fahrzeuges; 2. Manövrieren; 3. Beachtung der Verkehrsregeln; 4. Verhalten im Verkehr; 5. Reaktion auf besondere Situationen. Jede Fehlerkategorie kann verschiedenen, beispielsweise drei, Gewichtsklassen zugeteilt werden, so kann eine Fehlerkategorie für einen bestimmten Block bzw. in einem bestimmten Lernstadium wahlweise als unwesentlich, wesentlich und gravierend definiert sein. Ausserdem wird jeder Fehler mit einer von fünf Fehlerstufen, entsprechend etwa den Noten 1 - 5, bewertet, wobei eine sechste Fehlerstufe, entsprechend der Note 6, die Abwesenheit von Fehlern kennzeichnen kann. Mit der höchsten Fehlerstufe werden sogenannte 'fatale Fehler' bewertet, die zu einem sofortigen Abbruch des Blocks und ggfs. der Lektion führen.

Die gesamthafte Bewertung ergibt sich aus der Summe der in den Fehlerkategorien unter Berücksichtigung von deren Gewichtung erzielten Noten. Ein Standard für eine genügende bzw. ungenügende Beendigung eines Blockes kann je nach den Anforderungen bzw. dem Lernstadium gesetzt werden.

In den **Fig. 5A - 5D** zeigen einfache Linien, dass der vorher absolvierte Block nicht mit einer genügenden Bewertung absolviert wurde; Doppellinien stellen dar, dass der vorher absolvierte Block mit einer genügenden Bewertung absolviert wurde; nach dem Einführungsteil erfolgt keine Bewertung, weshalb der erste Block des Übungsteils mittels einer Wellenlinie mit dem ausgewählten Block des Einführungsteils verbunden ist. Gestrichelte einfache oder doppelte Linien bedeuten, dass innerhalb der Lektion nicht fortgeschritten wird sondern eine Wiederholung stattfindet.

**Fig. 5A** zeigt, wie eine übliche Lektion mit einem Maximal-Pensum absolviert wird, und zwar ohne Bewertung. Fatale Fehler werden also nicht festgestellt oder führen nicht zum Abbruch der Lektion; ebenso hat eine ungenügende Absolvierung aller Blöcke einer Stufe keine Folgen; anderseits werden auch bei Abwesenheit von Fehlern keine Blöcke übersprungen.

Die **Fig. 5B - 5D** zeigen, wie sich die Bewertung auf die Durchführung und damit auf die zeitliche Dauer der Lektion auswirken kann. Die **Fig. 4B - 4D** sind ohne zusätzliche Angaben verständlich und werden daher nicht weiter beschrieben.

Es liegt auf der Hand, dass die Möglichkeiten der Verwendung des erfindungsgemässe Systems sowohl infolge der Herstellung und Kombinationsmöglichkeiten für die Blöcke auch infolge der Variationsmöglichkeiten der Bewertungskriterien sehr zahlreich sind.

Abschliessend kann gesagt werden, dass das neue, System es ermöglicht, den Unterricht zur Erlernen des Führers eines motorisierten Fahrzeuges in attraktiver, effizienter und ökonomisch wie auch ökologisch befriedigender Weise durchzuführen.

## Patentansprüche

1. System zum Erlernen des Führens eines Motorfahrzeuges durch einen Fahrschüler,
- mit einer Simulationsanlage, durch welche dem Fahrschüler zeitlich wechselnde Verkehrssituationen zur Wahrnehmung bringbar sind, und
- mit modulartigen Blöcken, in welchen die Verkehrssituationen zusammen mit Informationen gespeichert sind, wobei für eine Lektion (**L**) mehrere Blöcke aneinandergereiht sind und jede Lektion (**L**) mindestens einen Übungsteil (**E**) mit mindestens einem zu Übungszwecken geeigneten Block (**e1-1 bis e4-4**) enthält, und
- mit Mitteln, durch welche ein Instruktor in die Lektion (**L**) eingreifen kann
**dadurch gekennzeichnet,**
- dass die dem Fahrschüler des erdgebundenen Motorfahrzeuges erteilte Lektion (**L**) einen vor dem Übungsteil (**E**) angeordneten Einführungsteil (**I**) mit mindestens einem, zur Einführung geeigneten Block (**i1**) enthält, und
- dass die Mittel, durch welche der Instruktor in die Lektion (**L**) eingreifen kann, zur temporären Änderung der ununterbrochenen Lektion (**L**) vorgesehen sind.

2. System nach Anspruch **1**,
**dadurch gekennzeichnet,**
dass die Änderung ein simulierter Defekt am Motorfahrzeug ist.

3. System nach Anspruch **1**,
**dadurch gekennzeichnet,**
dass die Lektion (**L**) einen vor dem Übungsteil angeordneten Repetitionsteil (**R**) mit mindestens einem zur Repetition mindestens einer früheren Lektion geeigneten Block **(r1)** enthält.

4. System nach einem der obigen Ansprüche,
**dadurch gekennzeichnet,**
dass die den Übungsteils (**E**) jeder Lektion (**L**) bildenden Blöcke aus mindestens einer Übungsstufe mit mindestens zwei Blöcken **(e1-1 bis e4-4)** gebildet ist**.**

5. System nach einem der obigen Ansprüche,
**dadurch gekennzeichnet,**
dass in jeder Übungsstufe die auf den ersten Block **(e1-1; e2-1; e3-1; e4-1)** folgenden Blöcke **(e1-2 bis e1-4: e2-2 bis e2-4; e3-2 bis e3-4; e4-2 bis e4-4)** mindestens teilweise überspringbar sind.

6. System nach einem der obigen Ansprüche,
**dadurch gekennzeichnet,**
dass jede Lektion (**L**) einen Testteil (**T**) mit einem, ggfs. aus mehreren Testblöcken auswählbaren Testblock **(t1)** enthält.

7. System nach einem der obigen Ansprüche,
**dadurch gekennzeichnet,**
dass der jeder jeweils benötigte Block (**r, i, e, t**) aus mehreren gleichartigen Blöcken auswählbar ist.

8. Verfahren zur Herstellung des Systems nach einem der obigen Patentansprüche, wobei für jeden Block ein Grundszenario verwendet wird,
**dadurch gekennzeichnet,**
dass durch das Grundszenario der Weg des Fahrzeuges und die landschaftlich/bauliche Umgebung definiert werden.

9. Verfahren nach Anspruch **8**,
**dadurch gekennzeichnet,**
dass das Grundszenario durch mindestens einen Szenarienzusatz verändert wird.

10. Verfahren nach Anspruch **8** oder **9**,
**dadurch gekennzeichnet,**
dass das Grundszenario und/oder die Szenarienzusätze aus einer Vielzahl von Grundszenarien bzw. Szenarienzusätzen auswählbar ist.

11. Verfahren nach einem der Ansprüche **8 - 10,**
**dadurch gekennzeichnet,**
dass die Szenarienzusätze wahlweise die genaue Qualität der Strasse, das Fahrzeug beschreibende Daten, Verkehrszeichen, das Fahrzeug umgebenden, zeitlich und/oder situationsbedingt steuerbaren und kombinierbaren Verkehr, Sicht- und Wetterverhältnisse, akustische, mechanische und nasale Immissionen definieren.

12. Verwendung des Systems nach einem der Ansprüche **1 - 7,**
**dadurch gekennzeichnet,**
dass der Fahrschüler in jeder Lektion (**L**) mehrere Teile, nämlich einen Einführungsteil (**I**), einen Übungsteil (**E**) und einen Testteil (**T**) absolviert, denen ab der zweiten Lektion ein Repetitionsteil (**R**) vorgeschaltet wird.

13. Verwendung nach Anspruch **12,**
**dadurch gekennzeichnet,**
dass im Repetitionsteil (**R**), im Übungsteil (**E**) und im Testteil (**T**) blockweise eine Bewertung des Fahrschülers in Funktion der Qualität und/oder der Quantität von ihm begangener Fehler stattfindet, wobei die Fehler in Fehlerkategorien eingeteilt und jeder Fehler unterschiedlichen Fehlerstufen zugeteilt ist.

14. Verwendung nach einem der Ansprüche **12 - 13,**
**dadurch gekennzeichnet,**
dass im Übungsteil (**E**) bei Erreichung einer genügenden Bewertung in einem Block die restlichen Blöcke derselben Übungsstufe übersprungen werden.

## Claims

1. System for teaching a learner driver to drive a motor vehicle
- having a simulation unit which can be used to bring temporally changing traffic situations to the learner driver's attention, and
- having modular blocks in which the traffic situations are stored along with information, a plurality of blocks being strung together for a lesson (L) and each lesson (L) containing at least one practice section (E) with at least one block (e1-1 to e4-4) suitable for practice purposes, and
- having means by which an instructor can intervene in the lesson (L),
**characterised in that**
- the lesson (L) given to the learner driver of the terrestrial motor vehicle contains an introductory section (I) arranged before the practice section (E) and having at least one block (il) suitable as an introduction, and
- the means by which the instructor can intervene in the lesson (L) are provided for temporarily altering the interrupted lesson (L).

2. System according to claim 1,
**characterised in that** the alteration is a simulated defect on the motor vehicle.

3. System according to claim 1,
**characterised in that** the lesson (L) contains a repetition section (R) arranged before the practice section and having at least one block (r1) suitable for repeating at least one earlier lesson.

4. System according to any of the above claims,
**characterised in that** the blocks forming the practice section (E) of each lesson (L) are constituted by at least one practice stage comprising at least two blocks (e1-1 to **e4-4**).

5. System according to any of the above claims,
**characterised in that** in each practice stage it is possible to skip at least some of the blocks (e1-2 to e1-4; e2-2 to e2-4; e3-2 to e3-4; e4-2 to e4-4) which follow the first block (e1-1; e2-1; e3-1; e4-1).

6. System according to any of the above claims,
**characterised in that** each lesson (L) contains a test section (T) with one test block (tl) which can, if appropriate, be selected from a plurality of test blocks.

7. System according to any of the above claims,
**characterised in that** each particular block required (r, i, e, t) can be selected from a plurality of similar blocks.

8. Method for producing the system according to any of the above claims, employing a basic scenario for each block,
**characterised in that** the basic scenario defines the vehicle's route and the rural/urban environment.

9. Method according to claim 8,
**characterised in that** the basic scenario is modified by at least one scenario add-on.

10. .Method according to claim 8 or 9,
**characterised in that** the basic scenario and/or the scenario add-ons can be selected from a large number of basic scenarios and scenario add-ons.

11. Method according to any of claims 8 to 10,
**characterised in that** the scenario add-ons, as required, define the exact nature of the road, data describing the vehicle, traffic signs, traffic surrounding the vehicle and which can be temporally and/or situational controlled and combined, visibility and weather conditions, acoustic, mechanical and olfactory emissions.

12. Use of the system according to any of claims 1 to 7,
**characterised in that** in each lesson (L) the learner driver covers a plurality of sections, namely an introductory section (I), a practice section (E) and a test section (T), which from the second lesson onwards are preceded by a repetition section (R).

13. Use according to claim 12,
**characterised in that** in the repetition section (R), in the practice section (E) and in the test section (T) the learner driver is assessed module by module in terms of the nature and/or number of errors made by him or her, the error being graded into error classes and each error being assigned to different error levels.

14. Use according to either of claims 12 and 13,
**characterised in that** in the practice section (E) once a satisfactory assessment has been achieved in a block, the remaining blocks of the same practice stage are skipped.

## Revendications

1. Système pour l'apprentissage de la conduite d'un véhicule à moteur par un apprenti conducteur, comportant
- une installation de simulation, à l'aide de laquelle des situations de trafic variables dans le temps peuvent être présentées à l'apprenti conducteur, et
- des blocs modulaires, dans lesquels les situations de trafic sont mémorisées conjointement avec des informations, plusieurs blocs étant disposés en série pour suivre une leçon (L) et chaque leçon (L) comprend au moins une partie d'exercice (E) comportant au moins un bloc (e1-1 à e4-4) convenant pour l'exécution d'un exercice, et
- des moyens, à l'aide desquels un instructeur peut intervenir dans la leçon (L),
caractérisé en ce
- que la leçon (L) donnée à l'apprenti conducteur du véhicule à moteur terrestre contient une partie d'introduction (I) située avant la partie d'exercice (E) et contenant au moins un bloc (il) convenant pour l'introduction, et
- que les moyens, à l'aide desquels l'instructeur peut intervenir dans la leçon (L) , sont prévus pour une modification temporaire de la leçon ininterrompue (L).

2. Système selon la revendication 1, caractérisé en ce que la modification est un défaut simulé sur le véhicule à moteur.

3. Système selon la revendication 1, caractérisé en ce que la leçon (L) contient une partie de répétition (R) située en avant de la partie d'exercice et comprenant un bloc (r1) convenant pour la répétition d'au moins une leçon précédente.

4. Système selon l'une des revendications précédentes, caractérisé en ce que les blocs constituant la partie d'exercice (E) de chaque leçon (L) sont formés par au moins une étape d'exercice comprenant au moins deux blocs (e1-1 à e4-4).

5. Système selon l'une des revendications précédentes, caractérisé en ce que dans chaque étape d'exercice, les blocs (e1-2 à e1-4 ; e2-2 à e2-4 ; e3-2 à e3-4 ; e4-2 à e4-4), qui succèdent au premier bloc (e1-1 ; e2-1 ; e3-1 ; e4-1), peuvent être au moins partiellement sautés.

6. Système selon l'une des revendications précédentes, caractérisé en ce que chaque leçon (L) contient une partie de test (T) comprenant un bloc de test (t1) pouvant être sélectionné éventuellement parmi plusieurs blocs de test.

7. Système selon l'une des revendications précédentes, caractérisé en ce que chaque bloc respectivement nécessaire (r, i, e, t) peut être sélectionné parmi plusieurs blocs identiques.

8. Procédé pour fabriquer le système selon l'une des revendications précédentes, selon lequel pour chaque bloc on utilise un scénario de base, caractérisé en ce que le trajet du véhicule et l'environnement formé d'un paysage/de constructions sont définis par le scénario de base.

9. Procédé selon la revendication 8, caractérisé en ce qu'on modifie le scénario de base à l'aide d'au moins un additif au scénario.

10. Procédé selon la revendication 8 ou 9, caractérisé en ce que le scénario de base et/ou les additifs au scénario peuvent être sélectionnés à partir d'une multiplicité de scénarios de base et d'additifs aux scénarios.

11. Procédé selon l'une des revendications 8-10, caractérisé en ce que les additifs aux scénarios définissent au choix la qualité précise de la chaussée, des données décrivant le véhicule, des signaux de trafic, des conditions de trafic, des conditions d'observation et des conditions atmosphé-riques, qui entourent le véhicule et peuvent être comman-dées dans le temps ou en fonction de la situation et peuvent être combinées, définissent des insertions acous-tiques, mécaniques et nasales.

12. Utilisation du système selon l'une des revendications 1-7, caractérisée en ce que dans chaque leçon (L), l'apprenti conducteur suit plusieurs parties, à savoir la partie d'introduction (I), la partie d'exercice (E) et la partie de test (T), avant lesquelles une partie de répétition (R) est insérée à partir de la deuxième leçon.

13. Utilisation selon la revendication 12, caractérisée en ce que dans la partie de répétition (R), dans la partie d'exercice (E) et dans la partie de test (T) une évaluation de l'apprenti conducteur est exécutée bloc par bloc en fonction de la qualité et/ou de la quantité d'erreurs qu'il a commises, les erreurs étant classées selon des catégories d'erreurs, et chaque erreur étant associée à des niveaux différents d'erreur.

14. Utilisation selon l'une des revendications 12-13, caractérisée en ce que dans la partie d'exercice (R), lorsqu'une évaluation suffisante est établie dans un bloc, les autres blocs du même niveau d'exercice sont sautés.
